# EUROPEAN PATENT SPECIFICATION

(11) **EP 4 261 919 B1**
(45) Date of publication and mention of the grant of the patent: **06.08.2025**
(21) Application number: 22907766.4
(22) Date of filing: 28.11.2022
(51) Int. Cl.: H01M 4/04, H01M 4/139, H01M 4/36, H01M 4/38, H01M 4/62, H01M 10/052, H01M 4/02, H01M 4/58, H01M 4/1393, H01M 4/1397

(54) **METHOD FOR MANUFACTURING A POSITIVE ELECTRODE FOR A LITHIUM SECONDARY BATTERY**
VERFAHREN ZUR HERSTELLUNG EINER POSITIVEN ELEKTRODE FÜR EINE LITHIUMSEKUNDÄRBATTERIE
PROCÉDÉ DE FABRICATION D'UNE ÉLECTRODE POUR UNE BATTERIE SECONDAIRE AU LITHIUM

(30) Priority: 16.12.2021 KR 20210181018
(43) Date of publication of application: 18.10.2023
(73) Proprietor: LG Energy Solution, Ltd., Seoul 07335 (KR)
(72) Inventor: HONG, Kyungsik, Daejeon 34122 (KR); KIM, Minsu, Daejeon 34122 (KR); SHIN, Dongseok, Daejeon 34122 (KR)
(74) Representative: Goddar, Heinz J.
(86) International application number: PCT/KR2022/018937
(87) International publication number: WO 2023/113297

(56) References cited:
- WO-A1-2019/093826
- JP-A- 2017 059 473
- JP-A- 2020 126 763
- JP-A- 2020 149 862
- KR-A- 20180 068 520
- KR-A- 20200 017 340
- KR-A- 20200 017 340
- US-A1- 2016 181 651
- US-A1- 2017 256 781
- US-A1- 2018 269 464

## Description

### Field of Disclosure

The present disclosure relates to a method for manufacturing a positive electrode for a lithium secondary battery.

### Background

Recently, with the rapid development in the field of electronic devices and electric vehicles, the demand for secondary batteries is increasing. In particular, with the trend toward miniaturization and weight reduction of portable electronic devices, there is growing a demand for secondary batteries having a high energy density that can cope with the trend.

Among the secondary batteries, a lithium-sulfur secondary battery is a secondary battery that uses sulfur-based compounds having a sulfur-sulfur bond as a positive electrode active material, and uses alkali metals such as lithium, carbon-based materials in which intercalation and deintercalation of metal ions such as lithium ions occur, or silicon or tin which forms an alloy with lithium, as a negative electrode active material. Specifically, in the case of the lithium-sulfur secondary battery, during the discharging which is a reduction reaction, as the sulfur-sulfur bond is cut off, the oxidation number of sulfur decreases, and during the charging which is an oxidation reaction, as the oxidation number of sulfur increases, the sulfur-sulfur bond is re-formed. Through this oxidation-reduction reaction, electrical energy is stored and generated.

In particular, in the case of lithium-sulfur secondary batteries, sulfur used as a positive electrode active material in the lithium-sulfur secondary batteries has a theoretical energy density of 1.675 mAh/g, which is a theoretical energy density of about five times higher than the positive electrode active material used in conventional lithium secondary batteries, and thus they are batteries capable of expressing high power and high energy density. In addition, since sulfur has the advantage of being cheap and rich in resources and thus being readily available and environmentally friendly, sulfur is drawing attention as an energy source not only for portable electronic devices but also for medium- and large-devices such as electric vehicles.

Since sulfur has an electrical conductivity of 5x10⁻³⁰ S/cm, which is a nonconductor without electrical conductivity, there is a problem that the movement of electrons generated by the electrochemical reaction is difficult. Accordingly, sulfur is compounded with an electrically conductive material such as carbon that can provide an electrochemical reaction site, and the sulfur-carbon composite produced thereby is used.

In order to use the sulfur-carbon composite as a positive electrode active material, a method of manufacturing a positive electrode through a slurry coating process, i.e., a wet process of preparing a slurry together with an electrically conductive material and a binder, and then applying the slurry to a current collector is generally used.

However, the positive electrode manufactured by this wet process has a problem that the loading amount of the positive electrode active material in the positive electrode is lowered due to the electrically conductive material and the binder used in preparing the slurry, so that the energy density is reduced. Also, in the case of manufacturing the positive electrode by a wet process, there is a problem that additional costs are incurred due to mixing, coating, and drying processes, in addition to the problem due to the remaining moisture in the positive electrode.

On the other hand, in the case of manufacturing the positive electrode by a dry process, since the fiberization of the binder is essential, the type and content of the usable binder are limited. In addition, since this involves a premixing process of the positive electrode active material, the electrically conductive material and the binder, and a milling process in which a high shear force is applied for fiberization of the binder, there is a problem that the process becomes complicated and cost and time are increased. In addition, there is a problem that the positive electrode active material and the electrically conductive material may be crushed by the high energy applied during the fiberization process of the binder.

In addition, the powder of the fiberized binder is generally molded through a calendar rolling process, and at this time, since the rotation speed of the roll and the nip distance variable affect the loading and porosity of the positive electrode at the same time, it may be difficult to independently adjust the conditions during the process for controlling the characteristics of the positive electrode to be manufactured.

Therefore, in the method of manufacturing a positive electrode by a dry process, it is necessary to develop a technology for manufacturing a positive electrode in a dry process without a binder, in order to prevent problems caused by the binder.

### Related Art

Japanese Patent Application No. 2014-078497

### Summary

The inventors of the present disclosure have conducted various studies to solve the above problems, and as a result, have confirmed that, by configuring a feeding part that feeds a positive electrode material in the form of a powder and a shaping part that presses the positive electrode material, each of which operates independently, using pressure and temperature simultaneously in the shaping part, in an apparatus for manufacturing a positive electrode through a dry process, it is possible to form a positive electrode without using a binder, and it is easy to control a loading and a porosity of the positive electrode during manufacturing process, and thereby have completed one aspect of the present disclosure. Therefore, it is an object of one aspect of the present disclosure to provide a method for manufacturing a positive electrode for a lithium secondary battery by a dry process without using a binder.

In order to achieve the above object, the present disclosure provides a method for manufacturing a positive electrode for a lithium secondary battery, including: (S1) feeding the positive electrode material in the form of a powder onto one surface of a positive electrode current collector conveyed by a conveying means; (S2) pre-shaping by applying pressure to the positive electrode material in the form of a powder fed onto one surface of the positive electrode current collector, which is conveyed from step (S1), thereby forming a positive electrode material layer ; (S3) roll-pressing by applying pressure to the positive electrode current collector having the positive electrode material layer formed on the one surface, thereby controlling the porosity of the positive electrode material layer; and (S4) bonding the positive electrode material layer and the positive electrode current collector by heating the positive electrode current collector having the positive electrode material layer formed thereon, which has been pressed in step (S3), wherein the positive electrode material is without a binder.

After step (S4), the method may further comprise a step of (S5) recovering the positive electrode material in the form of a powder remaining on the positive electrode current collector into the feeding part.

Steps (S1) to (S4) may be repeated twice, and steps (S1) to (S4) may be sequentially performed.

According to one aspect of the present disclosure, a positive electrode can be manufactured by a dry process without using a binder by using an apparatus for manufacturing a positive electrode for a lithium secondary battery.

In addition, since the feeding part providing the positive electrode material in the form of a powder and the shaping part for pre-shaping, roll-pressing and bonding it, which are provided in the manufacturing device of the positive electrode for the lithium secondary battery, are provided to operate independently, the loading amount of the positive electrode may be adjusted in the feeding part and the porosity of the positive electrode may be adjusted in the shaping part, and thus the loading amount and porosity of the positive electrode can be independently adjusted in the manufacturing process of the positive electrode.

In addition, since the pressing is performed using a mold in the shape of the positive electrode in the shaping part, the remaining powder of the positive electrode material after roll-pressing can be recovered and used again.

### Description of Drawings

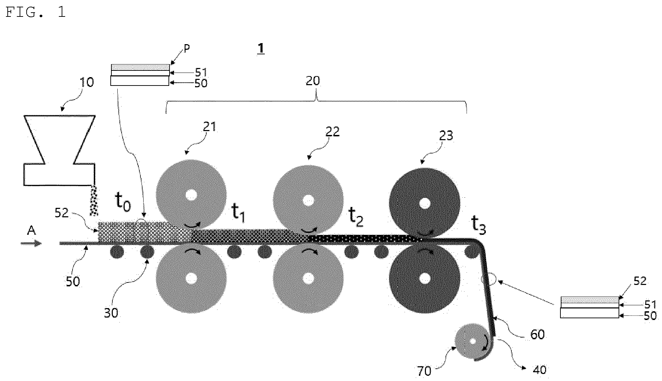

FIG. 1 is a schematic diagram of an apparatus for manufacturing a positive electrode for a lithium secondary battery according to an embodiment of one aspect of the present disclosure.

### Detailed Description

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

As used herein, the term "dry process" means a process that does not use a solvent.

### Manufacturing method of positive electrode for lithium secondary battery

One aspect of the present disclosure relates to an apparatus used in a method for manufacturing a positive electrode for a lithium secondary battery, wherein the positive electrode is produced by a dry process while not using a binder in the manufacture of the positive electrode.

FIG. 1 is a schematic diagram of an apparatus used in a method for manufacturing a positive electrode for a lithium secondary battery according to an embodiment of one aspect of the present disclosure.

Referring to FIG. 1, the apparatus 1 used in a method for manufacturing the positive electrode for the lithium secondary battery includes the feeding part 10 that feeds the positive electrode material P in the form of a powder onto one surface of the positive electrode current collector 50 conveyed by a conveying means 30 moving in one direction; and the shaping part 20 for pre-shaping, roll-pressing, and bonding the positive electrode material P in the form of a powder fed onto one surface of the positive electrode current collector 50 in the form of a positive electrode active material layer 52, wherein the shaping part 20 comprises a shaping roll 21, a press roll 22, and a bonding roll 23 arranged in a row. Each of the pre-shaping roll 21, the press roll 22, and the bonding roll 23 comprises a pair of rolls symmetrical to each other, and the conveying means 30 is conveyed in the one direction passing between the pair of rolls. In addition, the apparatus for manufacturing the positive electrode for the lithium secondary battery 1 may further include the positive electrode material recovery unit 40 for conveying the positive electrode material P in the form of a powder remaining on the positive electrode current collector 50, after being pre-shaped, rolled and bonded by the shaping part 20, to the feeding part 10.

In the apparatus used in a method for manufacturing the positive electrode for the lithium secondary battery 1 according to an embodiment of one aspect of the present disclosure, since a series of processes, in which the positive electrode current collector 50 is conveyed in one direction by the conveying means 30 and at the same time, the positive electrode material P in the form of a powder is fed from the feeding part 10, and then pre-shaped, rolled and bonded by the shaping part 20 to produce a positive electrode 60 for a lithium secondary battery, are performed as a continuous process, the process efficiency and productivity can be improved. The continuous process described above may also include a process of conveying the remaining positive electrode material P in the form of a powder to the feeding part 10 by the positive electrode material recovery unit 40.

The conveying means 30 may enable the continuous process as described above by conveying the positive electrode current collector 50 or the positive electrode current collector 50 coated with the positive electrode material P in the form of a powder along a predetermined conveying path in one direction. For example, the conveying means 30 may form a conveying path for conveying the positive electrode current collector 50 in the direction of arrow A, and the conveying means 30 may sequentially pass through the feeding part 10 and the shaping part 20 at a constant speed under the control of a driving part. As an example, the conveying means 30 is not particularly limited as long as it is a device capable of conveying a conveying object in the art. For example, the conveying means may be a device enabling a roll-to-roll process, and the roll-to-roll process may use an unwinder and a rewinder to convey the conveying means.

The positive electrode current collector 50 supports the positive electrode active material layer 52 and is not particularly limited as long as it has high electrical conductivity without causing chemical changes in the battery. For example, copper, stainless steel, aluminum, nickel, titanium, palladium, sintered carbon; copper or stainless-steel surface-treated with carbon, nickel, silver or the like; aluminum-cadmium alloy or the like may be used. In addition, the positive electrode current collector 50 can enhance the bonding strength with the positive electrode active material by having fine irregularities on its surface, and may be used in various forms such as film, sheet, foil, mesh, net, porous body, foam, or nonwoven fabric.

In addition, a primer coating layer 51 including a binder and an electrically conductive material may be formed on the surface of the positive electrode current collector 50. The primer coating layer 51 may play a role in enabling the positive electrode material P in the form of a powder to better bind to the positive electrode current collector 50.

The binder is not particularly limited as long as it is a binder commonly used in the art. For example, the binder may be any one selected from the group consisting of fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

In addition, the binder may be included in an amount of 10 to 30% by weight based on the total weight of the primer coating layer 51, and specifically, the content of the binder may be 10% by weight or more, 12% by weight or more, or 15% by weight or more, and may be 25% by weight or less, 28% by weight or less, or 30% by weight or less. If the content of the binder is less than 10% by weight, the adhesive strength of the positive electrode material P in the form of a powder to the positive electrode current collector 50 may be decreased. If the content of the binder exceeds 30% by weight, the performance and lifetime of the battery may be reduced by acting as resistance.

The electrically conductive material may play a role of imparting electrical conductivity to the positive electrode.

The electrically conductive material is not particularly limited as long as it can impart electrical conductivity to the positive electrode without causing chemical changes in the battery.

For example, as the electrically conductive material, graphite such as natural graphite and artificial graphite; carbon black such as acetylene black, Ketjen black, channel black, furnace black, lamp black, and thermal black; electrically conductive fibers such as carbon fiber and metal fiber; electrically conductive tubes such as carbon nanotubes; fluorocarbons; metal powders such as aluminum and nickel powder; electrically conductive whiskers such as zinc oxide and potassium titanate; electrically conductive metal oxides such as titanium oxide; or electrically conductive materials such as polyphenylene derivatives may be used.

In addition, the electrically conductive material may be included in an amount of 70 to 90% by weight based on the total weight of the primer coating layer, and specifically, the content of the electrically conductive material may be 70% by weight or more, 72% by weight or more, or 75% by weight or more, and may be 85% by weight or less, 88% by weight or less, or 90% by weight or less. If the content of the electrically conductive material is less than 70% by weight, the content of the binder in the primer coating layer is relatively high, and the primer coating layer acts as a resistance layer, and thus the performance and lifetime of the battery may be deteriorated, and the electrical conductivity of the positive electrode may be deteriorated. If the content of the electrically conductive material exceeds 90% by weight, the content of the binder is relatively small, and thus formability may be deteriorated.

The primer coating layer 51 may be formed by adding the binder and the electrically conductive material to a solvent and then applying it to one surface or both surfaces of the positive electrode current collector 50.

In this case, water or an organic solvent may be used as the solvent. If the binder is an aqueous binder, water may be used as the solvent. If the binder is a non-aqueous binder, an organic solvent may be used.

The organic solvent is not particularly limited as long as it is commonly used in the art. For example, the organic solvent may include at least one selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, tetraethylene glycol dimethyl ether (TEGDME), dioxolane (DOL), dimethylsulfuroxide, acetonitrile, dimethoxyethane, diethoxyethane, vinylene carbonate, sulfolane, gamma-butyrolactone, propylene sulfite, and tetrahydrofuran, and a mixture of two or more of them, and the like.

In one aspect of the present disclosure, the positive electrode material P in the form of a powder contains a sulfur-carbon composite composed of 50% by weight to 90% by weight of sulfur and 10% by weight to 50% by weight of a porous carbon material.

In addition, the positive electrode material in the form of a powder contains the sulfur-carbon composite in an amount of 90 to 100% by weight, preferably 95 to 100% by weight, and more preferably 97 to 100% by weight, based on the total weight of the positive electrode material.

The sulfur-carbon composite means a form in which sulfur is supported in the porous carbon material. For example, the sulfur-carbon composite may be in a state in which sulfur is attached or coated on the surface of the porous carbon material. In addition, the sulfur-carbon composite may be in a state in which sulfur is attached to, filled in, or coated to internal pores of the porous carbon material; or the sulfur is infiltrated and attached to the inside of the porous carbon material.

That is, the lithium secondary battery according to one aspect of the present disclosure may be a lithium-sulfur secondary battery including the sulfur-carbon composite in a positive electrode material.

The feeding part 10 provides the positive electrode material P in the form of a powder onto one surface of the positive electrode current collector 50 conveyed by the conveying means 30, and is not particularly limited in its configuration, device and the like. For example, the feeding part 10 may include an ultrasonic sieve machine, a vibratory feeder, or a rotary feeder to remove coarse particles from the positive electrode material P in the form of a powder.

Also, in the feeding part 10, not only can the loading amount of the positive electrode material P in the form of a powder be easily adjusted to suit the purpose, but also the deviation of the loading amount can be improved, and thus the loading amount of the finally manufactured positive electrode can be easily adjusted according to the application and the reliability of the manufacturing process can be improved.

The shaping part 20 is for pre-shaping the positive electrode material P in the form of a powder, which was fed onto one surface of the positive electrode current collector 50 while passing through the feeding part 10, into a positive electrode active material layer 52 in the form of a layer, and for roll-pressing to adjust the porosity by applying pressure, and then for bonding the positive electrode current collector 50 and the positive electrode active material layer 52 by applying a certain temperature, thereby manufacturing a positive electrode, and is not particularly limited in its configuration, device and the like.

The shaping part 20 includes a pre-shaping roll 21, a press roll 22, and a bonding roll 23 arranged in a line. Their arrangement direction is the same as the moving direction of the conveying means 30.

The pre-shaping roll 21 comprises a pair of rolls that are symmetrical to each other, and the positive electrode current collector 50 fed with the powdered positive electrode material P is conveyed in the one direction passing between the pair of rolls. Using the pair of rolls, pressure is applied to the upper and lower parts of the positive electrode current collector 50 fed with the positive electrode material P in the form of a powder, and the positive electrode material P in the form of a powder receives the pressure, thereby forming a positive electrode active material layer 52 in the form of a layer. When the positive electrode active material layer 52 is formed, the powder is stabilized and fluidization of the powder can be prevented.

Hereinafter, one comprising the positive electrode current collector 50 and the positive electrode active material layer 52 formed on one surface of the positive electrode current collector 50 is referred to as a positive electrode laminate.

The ratio of a thickness of the positive electrode active material layer 52 after passing through the pre-shaping roll 21 based on a thickness of the positive electrode active material P in the form of a powder before passing through the pre-shaping roll 21, may be 0.6 or more, and specifically may be 0.6 or more, 0.7 or more, or 0.8 or more, and the upper limit thereof is not particularly limited, but may be 0.9 or less. If the thickness ratio (α) of the positive electrode active material layer 52 before and after passing through the pre-shaping roll 21 is less than 0.6, the structure of the positive electrode material fed in the form of a powder is highly likely to collapse, and there is a problem of breaking when the force applied locally to the current collector is increased. If the thickness ratio (α) exceeds 0.9, the positive electrode active material layer 52 in the form of a layer cannot be formed properly, and the stabilization of the powder is not complete, which may cause the powder to fly.

In the pre-shaping roll 21, the positive electrode active material layer 52 in the form of a layer is caused to be formed well, and it can be pressed such that the thickness ratio (α) of the positive electrode active material layer 52 before and after passing can satisfy the range of 0.6 or more. The pressure to satisfy the thickness ratio described above can be properly adjusted during the process. For example, a pressure of 100 to 500 kPa may be applied to the upper and lower parts of the positive electrode current collector 50 fed with the positive electrode material P in the form of a powder. Specifically, the pressure may be 100 kPa or more, 150 kPa or more, or 200 kPa or more, and may be 400 kPa or less, 450 kPa or less, or 500 kPa or less. If the pressure is less than 100 kPa, the shape of the layer cannot be properly formed, and the stabilization of the powder is not complete, which may cause the powder to fly. If the pressure exceeds 500 kPa, the electrode may break.

The press roll 22 includes a pair of rolls symmetrical to each other, and the positive electrode laminate is conveyed in the one direction passing between the pair of rolls. The positive electrode laminate comprises the positive electrode current collector 50 and the positive electrode active material layer 52 passed through a pre-shaping roll 21.

The thickness ratio of the positive electrode active material layer 52 after passing through the press roll 22 based on the thickness of the positive electrode active material layer 52 before passing the press roll 22, that is, the positive electrode active material layer 52 passed through the pre-shaping roll 21 may be 0.5 or less, and specifically may be 0.5 or less, 0.4 or less, or 0.3 or less, and the lower limit thereof is not particularly limited, but may be 0.1 or more. If the thickness ratio (β) of the positive electrode active material layer 52 before and after passing through the press roll 22 exceeds 0.5, the process may take a long time to form a positive electrode active material layer with final porosity. If the thickness ratio (β) is less than 0.1, there is a possibility of breakage of the current collector due to excessive roll-pressing.

In the press roll 22, the positive electrode active material layer 52 in the form of a layer is caused to be formed well, and it can be pressed such that the thickness ratio (β) of the positive electrode active material layer 52 before and after passing can satisfy a range of 0.5 or more. The pressure to satisfy the thickness ratio described above can be properly adjusted during the process. For example, a pressure of 1 to 5 MPa may be applied to the upper and lower parts of the positive electrode laminate comprising the positive electrode current collector 50 and the positive electrode active material layer 52. Specifically, the pressure may be 1 MPa or more, 1.5 MPa or more, or 2 MPa or more, and may be 4 MPa or less, 4.5 MPa or less, or 5 MPa or less. If the pressure is less than 1 MPa, the porosity of the positive electrode produced is high, and thus the durability is lowered or the stabilization of the powder is not complete, which may cause the powder to fly. If the pressure exceeds 5 MPa, there may be a problem that the electrode breaks.

The bonding roll 23 includes a pair of rolls symmetrical to each other, and the positive electrode laminate is conveyed in the one direction passing between the pair of rolls. The positive electrode laminate comprises the positive electrode current collector 50 and the positive electrode active material layer 52 passed through the press roll 22.

In the bonding roll 23, an appropriate temperature and a slight pressure may be applied so that the positive electrode current collector 50 and the positive electrode active material layer 52 may be well bonded. The bonding roll 23 may use a rubber roll or use a roll having a thickness of several *µ*m lower than that of the electrode, and thus the bonding may be performed with a gap of several *µ*m.

The temperature may be 50 °C to 130 °C, and specifically, the temperature may be 50 °C or higher, 55 °C or higher, or 60 °C or higher, and may be 110 °C or lower, 120 °C or lower, or 130 °C or lower. If the temperature is less than 50 °C, the adhesive strength of the positive electrode active material layer 52 to the positive electrode current collector 50 may be decreased. If the temperature exceeds 130 °C, the sulfur content in the powder is out of the proper range, and thus the performance of the battery may be degraded.

The positive electrode laminate passed through the bonding roll 23 is manufactured into a positive electrode 60 for a lithium secondary battery comprising the positive electrode current collector 50 and the positive electrode active material layer 52 formed on one surface of the positive electrode current collector 50, and may be wound around the winding roll 70.

The positive electrode material recovery unit 40 may recover the positive electrode material P in the form of a powder from the positive electrode current collector 50 to the feeding part 10, in order to reuse the positive electrode material P in the form of a powder remaining in the positive electrode current collector 50 after the positive electrode active material layer 52 was formed on the positive electrode current collector 50 in the shaping part 20.

The positive electrode material recovery unit 40 is not particularly limited as long as it is a device capable of recovering the powder having almost no adhesive strength. For example, the positive electrode material recovery unit 40 may be a scraper, an air gun or the like.

In addition, the positive electrode material recovery unit 40 may be mounted at a corresponding position before the positive electrode manufactured by passing through the shaping part 30 is wound around the winding roll 70.

In addition, the positive electrode manufactured by passing through the shaping part 20 may be wound around the winding roll 70.

### Manufacturing method of positive electrode for lithium secondary battery

One aspect of the present disclosure relates to a method for manufacturing a positive electrode for the lithium secondary battery, which includes the steps of (S1) feeding the positive electrode material in the form of a powder onto one surface of a positive electrode current collector conveyed by a conveying means; (S2) pre-shaping by applying pressure to the positive electrode material in the form of a powder fed onto one surface of the positive electrode current collector, which is conveyed from step (S1), thereby forming a positive electrode material layer; (S3) roll-pressing by applying pressure to the positive electrode current collector having the positive electrode material layer formed on the one surface, thereby controlling the porosity of the positive electrode material layer; and (S4) bonding the positive electrode material layer and the positive electrode current collector by heating the positive electrode current collector having the positive electrode material layer formed thereon, which has been pressed in step (S3), and which may further comprise a step of (S5) recovering the positive electrode material in the form of a powder remaining on the positive electrode current collector after step (S4) into the feeding part.

Hereinafter, the method for manufacturing the positive electrode for the lithium secondary battery according to an embodiment of one aspect of the present disclosure will be described in detail for each step.

In step (S1) of the method for manufacturing a positive electrode for a lithium secondary battery according to an embodiment of one aspect of the present disclosure, the positive electrode material in the form of a powder can be fed onto one surface of the positive electrode current collector conveyed by the conveying means.

Step (S1) is performed in the feeding part as described above, and the contents of the conveying means, the positive electrode current collector, and the positive electrode material in the form of a powder are as described above.

In step (S2) of the method for manufacturing the positive electrode for the lithium secondary battery according to an embodiment of one aspect of the present disclosure, the pre-shaping may be performed by applying pressure to the positive electrode material in the form of a powder fed onto one surface of the positive electrode current collector, which is conveyed from step (S1), thereby forming a positive electrode material layer.

Step (S2) is performed on the pre-shaping roll of the shaping part as described above, and the device and pressure conditions provided in the pre-shaping roll are as described above.

In step (S3) of the method for manufacturing the positive electrode for the lithium secondary battery according to an embodiment of one aspect of the present disclosure, the porosity of the positive electrode material layer may be adjusted by applying pressure to the positive electrode current collector having the positive electrode material layer formed on the one surface.

Step (S3) is performed on the press roll of the shaping part as described above, and the contents on the device and pressure conditions provided in the press roll are as described above.

In step (S4) of the method for manufacturing the positive electrode for the lithium secondary battery according to an embodiment of one aspect of the present disclosure, the positive electrode material layer and the positive electrode current collector may be bonded by heating the positive electrode current collector having the positive electrode material layer formed thereon, which has been pressed in step (S3).

Step (S4) is performed on the bonding roll of the shaping part as described above, and the contents on the device and pressure conditions provided in the press roll are as described above.

In step (S5) of the method for manufacturing the positive electrode for the lithium secondary battery according to an embodiment of one aspect of the present disclosure, the positive electrode material in the form of a powder remaining on the positive electrode current collector after the bonding can be recovered into the feeding part.

Step (S5) is performed using a positive electrode material recovery unit, and the contents on the positive electrode material recovery unit are as described above.

In the method for manufacturing the positive electrode for the lithium secondary battery according to an embodiment of one aspect of the present disclosure, steps (S1) to (S4) may be repeated twice. Steps (S1) to (S4) may be sequentially performed.

After steps (S1) to (S4) are performed once, a positive electrode having a positive electrode active material layer formed on one surface of the positive electrode current collector can be manufactured.

Thereafter, steps (S1) to (S4) are repeated twice in total by performing steps (S1) to (S4) once more, and thus a positive electrode having a positive electrode active material layer formed on both surfaces of the positive electrode current collector can be manufactured.

Alternatively, after configuring the feeding part and the shaping part in two layers, the positive electrode material may be simultaneously fed onto both surfaces of the positive electrode current collector, thereby manufacturing, at once, a positive electrode having a positive electrode active material layer formed on both surfaces. In this case, the positive electrode active material layer on the upper surface of the positive electrode current collector may be formed in the same manner as in steps (S1) to (S4), and the positive electrode active material layer on the lower surface of the positive electrode current collector may be formed by conveying a foil instead of the positive electrode current collector and then transferring it to the positive electrode current collector in the shaping part. That is, the positive electrode material in the form of a powder is not separately fed from the feeding part to the lower surface of the positive electrode current collector, and the positive electrode material is transferred in the form of a foil.

### Description of Reference Numerals

1: Apparatus for manufacturing positive electrode for lithium secondary battery
10: Feeding part
20: Shaping part
21: Pre-shaping roll
22: Press roll
23: Bonding roll
30: Conveying means
40: Recovery unit
50: Positive electrode current collector
51: Primer coating layer
52: Positive electrode active material layer
60: Positive electrode
70: Winding roll
P: Positive electrode material in the form of a powder

## Claims

1. A method for manufacturing a positive electrode (60) for a lithium secondary battery, the method comprising:
(S1) feeding a positive electrode material in the form of a powder (P) onto one surface of a positive electrode current collector (50) conveyed by a conveying means (30);
(S2) pre-shaping by applying pressure to the positive electrode material in the form of a powder (P) fed onto one surface of the positive electrode current collector (50), which is conveyed from step (S1), thereby forming a positive electrode material layer (52);
(S3) roll-pressing by applying pressure to the positive electrode current collector (50) having the positive electrode material layer (52) formed on the one surface, thereby controlling a porosity of the positive electrode material layer (52); and
(S4) bonding the positive electrode material layer (52) and the positive electrode current collector (50) by heating the positive electrode current collector (50) having the positive electrode material layer (52) formed thereon, which has been roll-pressed in step (S3),
**characterised in that** the positive electrode material is without a binder.

2. The method according to claim 1, wherein the method further comprises, after step (S4), a step of (S5) recovering the positive electrode material in the form of a powder (P) remaining on the positive electrode current collector (50) into the feeding part (10).

3. The method according to claim 1, wherein steps (S1) to (S4) are repeated twice, and steps (S1) to (S4) are sequentially performed.

4. The method according to claim 1 using an apparatus for manufacturing a positive electrode for a lithium secondary battery (1), the apparatus comprising:
a feeding part (10) providing a positive electrode material in the form of a powder (P) onto one surface of a positive electrode current collector (50) conveyed by a conveying means (30) moving in one direction; and
a shaping part (20) pre-shaping, roll-pressing, and bonding the positive electrode material in the form of a powder (P) fed onto the one surface of the positive electrode current collector (50) in the form of a positive electrode material layer (52),
wherein the shaping part (20) comprises a pre-shaping roll (21), a press roll (22), and a bonding roll (23) arranged in a row, and
each of the pre-shaping roll (21), the press roll (22), and the bonding roll (23) comprises a pair of rolls symmetrical to each other, and the conveying means (30) being conf igured to convey in the one direction passing between the pair of rolls.

5. The method according to claim 4, wherein the pre-shaping roll (21) presses the positive electrode material layer (52) such that a ratio of a thickness of the positive electrode material layer (52) after passing through the pre-shaping roll (21) to a thickness before passing through the pre-shaping roll (21) is 0.6 or more.

6. The method according to claim 4, wherein the press roll (22) presses the positive electrode material layer (52) such that a ratio of a thickness of the positive electrode material layer (52) after passing through the press roll (22) to a thickness before passing through the press roll (22) is 0.5 or less.

7. The method according to claim 4, wherein the bonding roll (23) applies a temperature of 50 °C to 130 °C to bond the positive electrode current collector (50) and the positive electrode material layer (52).

8. The method according to claim 4, wherein the feeding part (10) comprises an ultrasonic sieve machine, a vibratory feeder, or a rotary feeder.

9. The method according to claim 4, wherein a primer coating layer (51) comprising a binder is formed on one surface of the positive electrode current collector (50).

10. The method according to claim 9, wherein the binder comprises at least one selected from the group consisting of fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders.

11. The method according to claim 4, wherein the positive electrode material in the form of a powder (P) comprises a sulfur-carbon composite composed of 50 to 90% by weight of sulfur and 10 to 50% by weight of a porous carbon material.

## Patentansprüche

1. Verfahren zur Herstellung einer positiven Elektrode (60) für eine Lithium-Sekundärbatterie, wobei das Verfahren umfasst:
(S1) Zuführen eines positiven Elektrodenmaterials in Form eines Pulvers (P) auf eine Oberfläche eines positiven Elektrodenstromabnehmers (50), der durch ein Fördermittel (30) gefördert wird;
(S2) Vorformen durch Ausüben von Druck auf das positive Elektrodenmaterial in Form eines Pulvers (P), das auf eine Oberfläche des positiven Elektrodenstromabnehmers (50) zugeführt wird, der aus Schritt (S1) gefördert wird, wodurch eine positive Elektrodenmaterialschicht (52) gebildet wird;
(S3) Walzpressen durch Ausüben von Druck auf den positiven Elektrodenstromabnehmer (50), der die positive Elektrodenmaterialschicht (52) aufweist, die auf der einen Oberfläche gebildet ist, wodurch eine Porosität der positiven Elektrodenmaterialschicht (52) gesteuert wird; und
(S4) Verbinden der positiven Elektrodenmaterialschicht (52) und des positiven Elektrodenstromabnehmers (50) durch Erwärmen des positiven Elektrodenstromabnehmers (50), der die positive Elektrodenmaterialschicht (52) aufweist, die darauf gebildet ist, der in Schritt (S3) walzgepresst wurde,
**dadurch gekennzeichnet, dass** das positive Elektrodenmaterial kein Bindemittel aufweist.

2. Verfahren nach Anspruch 1, wobei das Verfahren ferner nach Schritt (S4) einen Schritt (S5) des Wiedergewinnens des positiven Elektrodenmaterials in Form eines Pulvers (P), das auf dem positiven Elektrodenstromabnehmer (50) verbleibt, in das Zuführteil (10) umfasst.

3. Verfahren nach Anspruch 1, wobei die Schritte (S1) bis (S4) zweimal wiederholt werden und die Schritte (S1) bis (S4) nacheinander durchgeführt werden.

4. Verfahren nach Anspruch 1 unter Verwendung einer Vorrichtung zur Herstellung einer positiven Elektrode für eine Lithium-Sekundärbatterie (1), wobei die Vorrichtung umfasst:
ein Zuführteil (10), das ein positives Elektrodenmaterial in Form eines Pulvers (P) auf eine Oberfläche eines positiven Elektrodenstromabnehmers (50) bereitstellt, der durch ein Fördermittel (30) gefördert wird, das sich in eine Richtung bewegt; und
ein Formgebungsteil (20), das das positive Elektrodenmaterial in Form eines Pulvers (P), das auf die eine Oberfläche des positiven Elektrodenstromabnehmers (50) zugeführt wird, in Form einer positiven Elektrodenmaterialschicht (52) vorformt, walzpresst und verbindet,
wobei das Formgebungsteil (20) eine Vorformungswalze (21), eine Presswalze (22) und eine Verbindungswalze (23) umfasst, die in einer Reihe angeordnet sind, und
jede der Vorformungswalze (21), der Presswalze (22) und der Verbindungswalze (23) ein Paar Walzen umfasst, die zueinander symmetrisch sind, und das Fördermittel (30) konfiguriert ist, um in die eine Richtung zu fördern, die zwischen dem Paar Walzen verläuft.

5. Verfahren nach Anspruch 4, wobei die Vorformungswalze (21) die positive Elektrodenmaterialschicht (52) derart presst, dass ein Verhältnis einer Dicke der positiven Elektrodenmaterialschicht (52) nach dem Durchlaufen der Vorformungswalze (21) zu einer Dicke vor dem Durchlaufen der Vorformungswalze (21) 0,6 oder mehr beträgt.

6. Verfahren nach Anspruch 4, wobei die Presswalze (22) die positive Elektrodenmaterialschicht (52) derart presst, dass ein Verhältnis einer Dicke der positiven Elektrodenmaterialschicht (52) nach dem Durchlaufen der Presswalze (22) zu einer Dicke vor dem Durchlaufen der Presswalze (22) 0,5 oder weniger beträgt.

7. Verfahren nach Anspruch 4, wobei die Verbindungswalze (23) eine Temperatur von 50 °C bis 130 °C anwendet, um den positiven Elektrodenstromabnehmer (50) und die positive Elektrodenmaterialschicht (52) zu verbinden.

8. Verfahren nach Anspruch 4, wobei das Zuführteil (10) eine Ultraschallsiebmaschine, eine Vibrationszuführeinrichtung oder eine Rotationszuführeinrichtung umfasst.

9. Verfahren nach Anspruch 4, wobei eine Grundierungsbeschichtungsschicht (51), die ein Bindemittel umfasst, auf einer Oberfläche des positiven Elektrodenstromabnehmers (50) gebildet ist.

10. Verfahren nach Anspruch 9, wobei das Bindemittel mindestens eines umfasst, das ausgewählt ist aus der Gruppe bestehend aus Bindemitteln auf Fluorharzbasis, die Polyvinylidenfluorid (PVdF) oder Polytetrafluorethylen (PTFE) umfassen; Bindemitteln auf Kautschukbasis, die Styrol-Butadien-Kautschuk (SBR), Acrylnitril-Butadien-Kautschuk und Styrol-Isopren-Kautschuk umfassen; Bindemitteln auf Cellulosebasis, die Carboxymethylcellulose (CMC), Stärke, Hydroxypropylcellulose und regenerierte Cellulose umfassen; Bindemitteln auf Polyalkoholbasis; Bindemitteln auf Polyolefinbasis, die Polyethylen und Polypropylen umfassen; Bindemitteln auf Polyimidbasis; Bindemitteln auf Polyesterbasis; und Bindemitteln auf Silanbasis.

11. Verfahren nach Anspruch 4, wobei das positive Elektrodenmaterial in Form eines Pulvers (P) einen SchwefelKohlenstoff-Verbundwerkstoff umfasst, der aus 50 bis 90 Gew.-% Schwefel und 10 bis 50 Gew.-% eines porösen Kohlenstoffmaterials besteht.

## Revendications

1. Procédé de fabrication d'une électrode positive (60) pour une batterie rechargeable au lithium, le procédé consistant à :
(S1) alimenter un matériau d'électrode positive sous le forme d'une poudre (P) sur une surface d'un collecteur de courant d'électrode positive (50) transporté par un moyen de transport (30) ;
(S2) pré-former en exerçant une pression sur le matériau d'électrode positive sous le forme d'une poudre (P) alimenté sur une surface du collecteur de courant d'électrode positive (50), lequel est transporté de l'étape (S1), formant ainsi une couche de matériau d'électrode positive (52) ;
(S3) presser par rouleau en exerçant une pression sur le collecteur de courant d'électrode positive (50) ayant la couche de matériau d'électrode positive (52) formée sur ladite surface, régulant ainsi une porosité de la couche de matériau d'électrode positive (52) ; et
(S4) lier la couche de matériau d'électrode positive (52) et le collecteur de courant d'électrode positive (50) par chauffage du collecteur de courant d'électrode positive (50) ayant la couche de matériau d'électrode positive (52) y étant formée, lequel a été pressé par rouleau à l'étape (S3),
**caractérisé en ce que** le matériau d'électrode positive est sans liant.

2. Procédé selon la revendication 1, dans lequel le procédé comprend en outre, après l'étape (S4), une étape (S5) de récupération du matériau d'électrode positive sous le forme d'une poudre (P) restant sur le collecteur de courant d'électrode positive (50) dans la partie alimentation (10).

3. Procédé selon la revendication 1, dans lequel les étapes (S1) à (S4) sont répétées deux fois et les étapes (S1) et (S4) sont effectuées séquentiellement.

4. Procédé selon la revendication 1, utilisant un appareil pour fabriquer une électrode positive pour une batterie rechargeable au lithium (1), l'appareil comprenant :
une partie alimentation (10) fournissant un matériau d'électrode positive sous le forme d'une poudre (P) sur une surface d'un collecteur de courant d'électrode positive (50) transporté par un moyen de transport (30) se déplaçant dans une direction ; et
une partie mise en forme (20) pré-formant, pressant par rouleau et liant le matériau d'électrode positive sous le forme d'une poudre (P) alimenté sur ladite surface du collecteur de courant d'électrode positive (50) sous la forme d'une couche de matériau d'électrode positive (52),
dans lequel la partie mise en forme (20) comprend un rouleau de pré-mise en forme (21), un rouleau de pressage (22) et un rouleau de liaison (23) agencés en rang, et
le rouleau de pré-mise en forme (21), le rouleau de pressage (22) et le rouleau de liaison (23) comprennent chacun une paire de rouleaux symétriques l'un à l'autre, et le moyen de transport (30) qui est configuré pour transporter dans ladite direction qui passe entre la paire de rouleaux.

5. Procédé selon la revendication 4, dans lequel le rouleau de pré-mise en forme (21) presse la couche de matériau d'électrode positive (52) de telle sorte qu'un rapport d'une épaisseur de la couche de matériau d'électrode positive (52) après le passage à travers le rouleau de pré-mise en forme (21) à une épaisseur avant le passage à travers le rouleau de pré-mise en forme (21) est égal ou supérieur à 0,6.

6. Procédé selon la revendication 4, dans lequel le rouleau de pressage (22) presse la couche de matériau d'électrode positive (52) de telle sorte qu'un rapport d'une épaisseur de la couche de matériau d'électrode positive (52) après le passage à travers le rouleau de pressage (22) à une épaisseur avant le passage à travers le rouleau de pressage (22) est égal ou inférieur à 0,5.

7. Procédé selon la revendication 4, dans lequel le rouleau de liaison (23) applique une température de 50°C à 130°C pour lier le collecteur de courant d'électrode positive (50) et la couche de matériau d'électrode positive (52).

8. Procédé selon la revendication 4, dans lequel la partie alimentation (10) comprend une tamiseuse à ultrasons, un dispositif d'alimentation vibrant ou un dispositif d'alimentation rotatif.

9. Procédé selon la revendication 4, dans lequel une couche de revêtement primaire (51) comprenant un liant est formée sur une surface du collecteur de courant d'électrode positive (50).

10. Procédé selon la revendication 9, dans lequel le liant comprend un ou plusieurs éléments sélectionnés dans le groupe constitué de liants à base de fluororésine comprenant du fluorure de polyvinylidène (PVdF) ou du polytétrafluoroéthylène (PTFE) ; des liants à base de caoutchouc comprenant du caoutchouc de styrène-butadiène (SBR), du caoutchouc d'acrylonitrile-butadiène et du caoutchouc de styrène-isoprène ; des liants à base de cellulose comprenant de la carboxyméthylcellulose (CMC), de l'amidon, de l'hydroxypropylcellulose et de la cellulose régénérée ; des liants à base de polyalcool ; des liants à base de polyoléfine comprenant du polyéthylène et du polypropylène ; des liants à base de polyimide ; des liants à base de polyester ; et des liants à base de silane.

11. Procédé selon la revendication 4, dans lequel le matériau d'électrode positive sous le forme d'une poudre (P) comprend un composite soufre-carbone composé de 50 à 90 % en poids de soufre et de 10 à 50 % en poids d'un matériau de carbone poreux.
